# EUROPÄISCHE PATENTANMELDUNG

(11) **EP 1 626 099 A2**
(43) Veröffentlichungstag der Anmeldung: **15.02.2006**
(21) Anmeldenummer: 05017216.2
(22) Anmeldetag: 08.08.2005
(51) Int. Cl.: C22C 13/00, F16C 33/06, C23C 2/08

(54) **Zinnbad zum Verzinnen von Stützkörpern von Gleitlagern**

(30) Priorität: 12.08.2004 DE 102004039341
(71) Anmelder: Forschungsvereinigung Antriebstechnik e.V. (FAV), 60528 Frankfurt/Main (DE)
(72) Erfinder: Beiss, Paul, Prof. Dr. Ing., 52224 Stolberg (DE); Sell, Andreas, Dr. Ing., 52146 Würselen (DE); Akin, Okan, Dr. Ing., 6224 LA Maastricht 10 (NL)
(74) Vertreter: Metz, Siegfried

(57) **Zusammenfassung**

Für ein Zinn(Sn)-Bad zum Verzinnen von Stützkörpern von Gleitlagem wird vorgesehen, dem Sn-Bad zumindest einen Legierungsbestandteil zuzugeben, der bei Betriebstemperatur des Bades eine höhere Affinität zu Eisen(Fe) als Sn aufweist. Der Legierungsbestandteil wird bis zu seiner Löslichkeitsgrenze in der Sn-Schmelze gelöst. Durch Zugabe solcher Legierungsbestandteile werden auf dem Stützkörper Zwischenschichten zwischen Stützkörperoberfläche und Gleitlagermetall gebildet, die zu einer ausreichenden Bindungsfestigkeit des Gleitlagermetalls auf dem Stützkörper führen. Ein Oxidieren der Fe-Oberfläche der Stützkörper wird weitgehend unterbunden. Bevorzugt wird dem Sn-Bad Zink(Zn) zugegeben. Ein Schliffbild eines nach dem Verfahren hergestellten Stützkörpers mit einer Sn-Zwischenschicht, die zumindest einen Legierungsbestandteil aufweist, der eine höhere Affinität zu Fe als Sn aufweist, zeigt Figur 2. Die Zwischenschicht wurde auf dem Stützkörper durch Eintauchen in ein Sn/Zn-Bad mit 50 Gew% Sn und 50 Gew% Zn (Schmelzbadtemperatur 350°C) aufgebracht.

## Beschreibung

Die Erfindung betrifft ein Zinnbad zum Verzinnen von Stützkörpern von Gleitlagern und einen entsprechend durch Verzinnen hergestellten Stützkörper.

Stützkörper werden in Gleitlagem als Träger für die Gleitlagermetalle verwendet, auf denen sich in Lagerschalen die Lagerzapfen der zu lagemden Körper abstützen und bewegen. Damit die Gleitlagermetalle auf den Lagerschalen haften, dienen auf den Stützkörpern zwischen Stützkörperoberfläche und Gleitlagermetall aufgebrachte metallische Zwischenschichten, mit denen nicht nur eine gute Bindung zwischen den aus Stahl bestehenden Stützkörpern und dem Gleitlagermetall erreicht werden soll, sondem die auch thermische Spannungen auffangen müssen, die nach dem Aufgießen des Lagermetalls auf die Lagerschalen aufgrund der unterschiedlichen thermischen Dehnungen von Gleitlagermetall und Stützkörper auftreten. Bei Gleitlagermetallen auf Zinn(Sn)-Basis wird als Zwischenschicht auf den Stützkörpern eine Sn-Schicht gebildet, die an der Grenzfläche zum Stützkörper mit Eisen(Fe) zu FeSn₂ reagiert. FeSn₂ ist - wie alle intermetallischen Phasen - spröde, und je dicker sich die Schichten bilden, um so eher werden sie bei schlagartiger Beanspruchung zerstört. Es werden deshalb nur dünne Schichten vorgesehen, wobei die intermetallische Phase eine Stärke in der Größenordnung von 0,002 mm aufweist.

Zur Ausbildung der Zwischenschicht werden die Stützkörper entweder in ein reines Sn-Bad eingetaucht oder es findet - insbesondere bei größeren Gleitlagerabmessungen wie im Schwermaschinenbau - unter Verwendung von Zinnpulver, das mit Lötwasser zu Zinnbrei vermengt wird, eine Wischverzinnung der Lageroberflächen statt. Wegen des hohen Zinnpreises werden aus ökonomischen Gründen auch Lotbäder verwendet. Bekannt sind Lotbäder, die Blei(Pb) enthalten, vgl. "Gleitlagertechnik" TH Goldschmidt AG, Essen-Mannheim, 1992, S. 34/35. Pb enthaltende Lotbäder sind jedoch nur für bleihaltige Gleitlagermetalle geeignet. Für bleifreie Lagermetalle, die aus ökologischen Gründen bevorzugt werden, ist es erforderlich, dem Lotbad umweltverträgliche, ungiftige Metalle zuzusetzen, um eine Kontamination der Gleitlagermetalle zu vermeiden.

Zur Herstellung hohlzylindrischer Gleitlager ist es bekannt, das Schleudergussverfahren einzusetzen. Dabei kann auch die Zwischenschicht in einer Schleudergussanlage ausgebildet werden. So wird in DE 4339394 C1 angegeben, einen erwärmten Stützkörper zunächst durch eine elektrochemische Zementationsreaktion aus einer Zink-Chlorid-Schmelze, die Zinn-II-Chlorid enthält, zu verzinnen und die bei dieser Reaktion entstehenden Zinnoxide ihrerseits durch Aufbringen einer weiteren Schmelze, einer Zinn-Phosphor-Schmelze, zu reduzieren. Auf dem Stützkörper entsteht so eine oxidhautfreie Zinn-Schmelze, auf die dann Weißmetall aufgegossen wird. Die so ausgebildete intermetallische Schicht ist dünner als 0,0005 mm. Dieses zweistufige Verzinnungsverfahren weist einen erheblichen prozesstechnischen Aufwand auf. Darüber hinaus besteht bei Verwendung chlorhaltiger Salze die Gefahr von Reizungen und Verätzungen, es sind somit entsprechende Sicherheitsvorkehrungen zu treffen.

Aufgabe der Erfindung ist es, Zinnbäder auszubilden, mit denen sich Zwischenschichten auf der Gleitlageroberfläche erreichen lassen, die zu einer ausreichenden Bindungsfestigkeit des Gleitlagermetalls auf dem Stützkörper führen, und die unter Berücksichtigung optimaler wirtschaftlicher Bedingungen auch ökologisch unbedenklich zur Herstellung umweltverträglicher Gleitlager einsetzbar sind. Die Zwischenschichten sollen zugleich eine die Bindungsfestigkeit beeinträchtigende Oxidation auf der Fe-Oberfläche der Stützkörper unterbinden.

Diese Aufgabe wird ausgehend von einem Zinnbad der eingangs genannten Art durch einen Metallzusatz gelöst, wie er in Patentanspruch 1 angegeben ist. Danach wird dem Zinnbad zumindest ein Legierungsbestandteil, das bei Betriebstemperatur des Bades eine höhere Affinität zu Fe als Sn aufweist, bis zu dessen Löslichkeitsgrenze in der Sn-Schmelze zugegeben. Die Löslichkeitsgrenze ist Temperatur abhängig. Aufgrund dieser Temperaturabhängigkeit lassen sich die im Zinnbad gelösten Legierungsanteile durch Temperaturregelung der Schmelze sehr genau einstellen. Die jeweils eingestellte Temperatur der Schmelze ist die für das vorgenannte Affinitätsverhältnis maßgebende Betriebstemperatur des Bades. Bevorzugt wird dem Zinnbad Zink(Zn) zugegeben, Patentanspruch 2. Im Zweistoffsystem Zn/Sn bedingt die Temperaturabhängigkeit der Löslichkeitsgrenze, dass in der Sn-Schmelze um so mehr Zn gelöst ist, je höher die Badtemperatur eingestellt ist. Auch hat sich bei Verwendung von Zn im Zinnbad herausgestellt, dass sich eine bessere Bindung des Gleitlagermetalls auf dem Stützkörper erreichen lässt, als dies bei Verwendung von Reinzinnbädem der Fall ist. So bildet sich aufgrund der hohen Affinität zwischen Zn und Fe, die höher ist als die Affinität zwischen Sn und Fe, auf der Fe-Oberfläche des Stützkörpers als Zwischenschicht spontan eine Zn und Fe enthaltende intermetallische Phase, was eine die Bindungswirkung störende Oxidation auf der Stützkörperoberfläche verhindert. Vorteilhaft ist darüber hinaus, dass die Zn/Fe-Schicht auf dem Stützkörper aufgrund ihres niedrigen Schmelzpunktes beim Aufgießen des Gleitlagermetalls wieder aufschmilzt, in das Gleitlagermetall eindringt und in der Lagermetalllegierung gelöst wird, so dass sich Gleitlagermetall und Zwischenschicht miteinander fest verbinden. Die Bindungsfestigkeit des Gleitlagermetalls auf der Zwischenschicht wird somit durch Beschichtung des Stützkörpers im erfindungsgemäßen Sn/Zn-Bad (durch ein "Verzinn-zinken") gegenüber einer Beschichtung im Reinzinnbad erheblich gesteigert.

Um die geforderte Löslichkeitsgrenze von Zn in der Sn-Schmelze bei eingestellter Schmelztemperatur stets zu erreichen, besteht eine vorteilhafte Weiterbildung der Erfindung darin, der Sn-Schmelze festes Zn in einer Menge beizugeben, die die in der Sn-Schmelze jeweils lösbare Zn-Menge übersteigt, Patentanspruch 3. Es stellt sich in der Sn/Zn-Schmelze ein Gleichgewicht zwischen den Metallkomponenten ein, und die bei der jeweils eingestellten Schmelztemperatur im Zinnbad bis zur Löslichkeitsgrenze zu lösende Zn-Menge löst sich bei steigender Temperatur von selbst bzw. kristallisiert bei sinkender Temperatur aus. Die erforderliche Zn-Menge in der Sn-Schmelze wird auf diese Weise jeweils selbstregulierend eingestellt. Analog zu festem Zn kann auch eine Zn-Legierung eingesetzt werden, aus der Zn in einer dem Phasengleichgewicht zwischen Sn/Zn entsprechenden Menge lösbar ist, Patentanspruch 4.

Bevorzugt wird nach Patenanspruch 5 in die Sn-Schmelze ein Zn-Körper oder ein Körper aus einer Zn-Legierung eingetaucht. Solche Metallkörper lösen sich sukzessive in der Sn-Schmelze auf, wobei entsprechend der eingestellten Badtemperatur jeweils nur soviel Zn in die Schmelze geht, wie durch Verarbeitung verbraucht wird.

Um im Sn/Zn-Bad den Gehalt der beiden Metallkomponenten jeweils auf 50 Gew% einzustellen, weist die Sn/Zn-Schmelze entsprechend ihrem Phasengleichgewicht eine Temperatur von 350 °C auf, Patentanspruch 6.

Gemäß Patentanspruch 7 sind in der Sn-Schmelze statt Zn oder neben Zn weitere Legierungselemente einsetzbar, die mit Fe Verbindungen oder Mischkristalle bilden und gleichzeitig als Gleitlagermetalle oder als Legierungselemente in Gleitlagermetallen verwendet werden.

Unter Berücksichtigung einer hohen Bindungsfestigkeit des Gleitlagermetalls auf dem Stützkörper sind nach Patentanspruch 8 vorzugsweise solche Metalle geeignet, die einen mittleren linearen Ausdehnungskoeffizienten aufweisen, der größer ist als der von Fe. Somit kommen als Metallzusatz neben Zn insbesondere Gold(Au), Kupfer(Cu), Tellur(Te), Silber(Ag), Selen(Se), Aluminium(Al), Wismut(Bi) und/oder Indium(In) oder Legierungen in Betracht, die die vorgenannten Metalle kombiniert enthalten, Patentanspruch 9.

Gemäß Patentanspruch 10 können im Schmelzbad auch geringe Mengen Blei(Pb), Cadmium(Cd) und/oder Arsen(As) enthalten sein, soweit ihre Beimengen unterhalb vorgegebener ökologischer Maximalwerte bleiben.

Nach Patentansprüchen 11 bis 17 werden Stützkörper für Gleitlagermetalle unter Schutz gestellt, deren Zwischenschicht durch Verzinnen gemäß dem erfindungsgemäßem Verfahren hergestellt ist und die entsprechend zumindest einen Legierungsbestandteil enthält, der eine höhere Affinität zu Fe als Sn aufweist. Bevorzugt enthält die Zwischenschicht Zink (Zn), insbesondere Sn und Zn in gleichem Gewichtsverhältnis. Statt Zn oder neben Zn kann die Zwischenschicht ein oder mehrere Legierungselemente enthalten, die mit Fe Verbindungen oder Mischkristalle bilden und die gleichzeitig als Gleitlagermetalle oder als Legierungselemente in Gleitlagermetallen verwendet werden. Eine hohe Bindungsfestigkeit des Gleitlagermetalls auf dem Stützkörper wird durch Metalle in der Zwischenschicht erreicht, die einen mittleren linearen Ausdehnungskoeffizienten aufweisen, der größer ist als der von Fe. Als Metallzusatz neben Zn sind insoweit insbesondere Gold(Au), Kupfer(Cu), Tellur(Te), Silber(Ag), Selen(Se), Aluminium(Al), Wsmut(Bi) und/oder Indium(In) oder Legierungen geeignet, die die vorgenannten Metalle kombiniert enthalten. Auch Pb, Cd und/oder As können enthalten sein, soweit ihre Beimengen unterhalb vorgegebener ökologischer Maximalwerte bleiben.

Die Erfindung und weitere Ausbildungen der Erfindung werden nachfolgend anhand von Ausführungsbeispielen näher beschrieben. Die Abbildungen zeigen:
- Figur 1: Phasendiagramm Zn/Sn,
- Figur 2: Schliffbild einer auf einem Stützkörper aus Stahl durch Eintauchen in ein Sn/Zn-Bad aufgebrachten Zwischenschicht,
- Figur 3: Änderung der freien Enthalpie bei Bildung intermetallischer Phasen mit Fe,
- Figur 4: linearer Ausdehnungskoeffizient von Metallen, die dem Sn-Bad zuzusetzen sind.

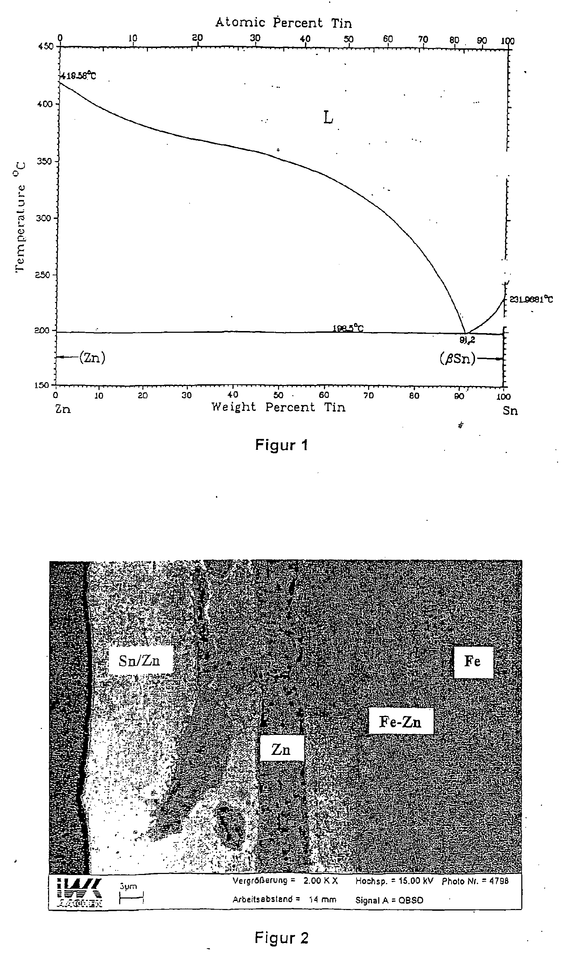

Aus dem Phasendiagramm des Zweistoffsystems Zn/Sn, Figur 1 (siehe hierzu ASM Handbook, Alloy Phase Diagrams, Vol.3, ASM International, Ohio 1992), ist ersichtlich, dass der Zn-Gehalt in der Sn/Zn-Schmelze mehr als 8 Gew% betragen muss, um den Phasenbereich zwischen Reinzink und Eutektikum des ZweistoffSystems bei 91,2 Gew% Sn ausnutzen zu können. Im Ausführungsbeispiel ist im Sn/Zn-Bad festes Zn in einer Menge enthalten, die die in der Sn/Zn-Schmelze bei der jeweils eingestellten Badtemperatur zu lösende Zn-Menge übersteigt. Im Ausführungsbeispiel taucht als Zn-Körper ein Zn-Stab in die Sn/Zn-Schmelze ein. So stellt sich in der Sn/Zn-Schmelze das dem Phasengleichgewicht entsprechende Mengenverhältnis zwischen Zn und Sn durch Auflösen von Zn selbstregulierend ein. Auch der nicht vermeidbare Abbrand von Zn wird selbsttätig ausgeglichen. Bei einer Schmelzbadtemperatur von 350°C sind in der Schmelze Sn und Zn im Verhältnis 1:1 gelöst, das Schmelzbad enthält 50 Gew% Sn und 50 Gew% Zn.

Kommt es darauf an, die Stützkörper bei einer möglichst niedrigen Schmelzbadtemperatur zu "verzinn-zinken", ist es zweckmäßig, eutektische Verhältnisse einzustellen (bei 91,2 Gew% Sn und dementsprechend 8,8 Gew% Zn ergibt sich eine Schmelztemperatur von 200°C, siehe Figur 1).

Wird ein Stützkörper aus Stahl in ein Sn/Zn-Bad eingetaucht, das auf eine Schmelzbadtemperatur von 350°C eingestellt ist und somit 50 Gew% Sn und 50 Gew% Zn enthält, wird auf der Stützkörperoberfläche eine Sn/Zn/Fe-Zwischenschicht gebildet, wie sie aus Fig.2 ersichtlich ist. Unmittelbar auf der Fe-Oberfläche des Stützkörpers entsteht wegen der höheren Affinität des Zn zu Fe ein innerer Zn/Fe-Bereich, während sich im äußeren Bereich der Zwischenschicht ein Zn/Sn-Bereich bildet, dessen Legierungsbestandteile dem Phasengleichgewicht im Zweistoffsystem Zn/Sn entsprechen. Zwischen dem inneren Zn/Fe-Bereich und dem äußeren Zn/Sn-Bereich sind in der Zwischenschicht auch Reste von elementarem Zn zu finden.

Auf die Zwischenschicht wurde im Ausführungsbeispiel ein Gleitlagermetall aufgegossen, wie es der deutschen Patentschrift DE 10145389 C2 entspricht. Das Gleitlagermetall enthält Sn 80,6Gew%, Sb 11,8Gew%, Cu 5,8Gew% und Bi 1,8Gew%. Für dieses Gleitlagermetall wurde eine Bindungsfestigkeit von 80 MPa erreicht. Dagegen betrug die Bindungsfestigkeit des gleichen Gleitlagermetalls auf einer Zwischenschicht, die auf einem Stützkörper aus Stahl durch Eintauchen in ein reines Zinnbad mit einer Temperatur von 300°C erzeugt worden war, nur 23 MPa.

Durch Behandlung der Stützkörperlagerschale in einem Sn/Zn-Bad mit 50 Gew% Sn und 50 Gew% Zn (Schmelzbadtemperatur 350°C) konnte somit unter sonst gleichen Bedingungen die Bindungsfestigkeit auf mehr als das Dreifache gesteigert werden.

Als Ausführungsbeispiel sind neben Zn bevorzugt folgende Metalle mit höherer Affinität zu Fe als Sn geeignet: Antimon(Sb), Gold(Au), Kupfer(Cu), Tellur(Te), Silber (Ag), Aluminium(Al), Selen(Se), Wismut(Bi) und/oder Indium(In) oder Legierungen die die vorgenannten Metalle kombiniert enthalten.

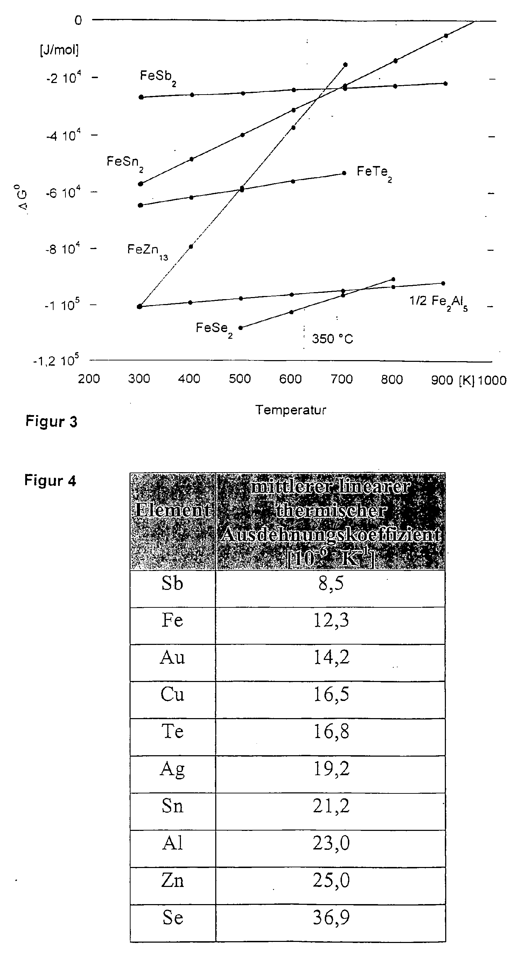

Als Maß für die Affinität der Metalle kann die Änderung der freien Enthalpie ΔG⁰ bei der Bildung der intermetallischen Phasen angesehen werden. Als geeignete Metalle kommen dann Elemente in Betracht, deren Änderung der freien Enthalpie ΔG⁰ bei der Phasenbildung mit Fe vom Betrag her größer ist als der Betrag von ΔG⁰ bei der Bildung der Phase FeSn₂. Figur 3 zeigt in linearem Maßstab aus Veröffentlichungen bekannte Werte für die Änderung der freien Enthalpie ΔG⁰ in Joule/Mol (J/Mol) in Abhängigkeit von der Temperatur in Kelvin (K) für die intermetallischen Phasen FeSb₂, FeSn₂, FeTe₂, FeZn₁₃, 1/2Fe₂Al₅, FeSe₂. Bei einer Betriebstemperatur von 350 °C, die in Figur 3 eingetragen ist, weisen FeTe₂, FeZn₁₃, 1/2Fe₂Al₅ und FeSe₂ vom Betrag her höhere Werte für die Enthalpieänderung ΔG⁰ auf als FeSn₂. Oberhalb von ca.410°C Badtemperatur liegt auch der Wert ΔG⁰ für FeSb₂ vom Betrag her oberhalb des Wertes von FeSn₂, während ΔG⁰ von FeZn₁₃ betragsmäßig ab einer Temperatur von 380°C niedriger liegt. Nach diesen Werten ist somit Sb als Zusatzmetall in der Sn-Schmelze erst oberhalb einer Betriebstemperatur von 410°C geeignet, während.Zn auch unterhalb von ca.380°C mit Fe zu FeZn₁₃ reagiert. Die in Figur 3 angegebenen ΔG⁰-Werte sind Literaturstellen entnommen, die am Ende der Beschreibung zitiert sind.

Zur Optimierung der Bindungsfestigkeit des Gleitlagermetalls auf dem Stützkörper ist zusätzlich der mittlere thermische Ausdehnungskoeffizient der zugesetzten Metalle als entscheidend für deren Auswahl anzusehen. Es werden bevorzugt solche Metalle eingesetzt, deren mittlerer thermischer Ausdehnungskoeffizient größer als der von Fe ist. Für Fe beträgt der mittlere lineare thermische Ausdehnungskoeffizient Fe = 12,3×10⁻⁶ K⁻¹. Für die Metalle Sb, Au, Cu, Te, Ag, Sn, Al, Zn und Se sind die mittleren linearen thermischen Ausdehnungskoeffizienten in Figur 4 angegeben. Die Werte sind Literatur entnommen, die am Ende der Beschreibung zu Figur 4 zitiert ist. Unter Berücksichtigung des thermischen Ausdehnungskoeffizienten ist Sb mit einem Ausdehnungskoeffizienten von 8,5×10⁻⁶ K⁻¹ als Legierungsbestandteil für die Sn-Schmelze weniger gut geeignet.

Alle vorgenannten Metalle bilden mit Fe Verbindungen oder Mischkristalle und können gleichzeitig als Gleitlagermetalle oder als Legierungselemente in Gleitlagermetallen verwendet werden.

### Literatur zu Figur 3:

Werte zur freien Enthalpie ΔG⁰
für FeSn₂ aus
Hari Kumar, K. C.; Wollants, P.; Delaey, L.:
Thermodynamic Evaluation of Fe-Sn Phase Diagramm
Chalphad, Vol. 20 (1996) No.2, pp. 139-149,
für Fe₂Al₅ aus
Scientific Group Thermodata Europe (SGTE)
Thermodynamic Properties of Inorganic Materials, Part I: Elements and Binary Systems from Ag-Al to Au-Tl
in: Landolt-Bömstein, New Series, Group IV, Volume 19, Subvolume B, pp. 143-147,
Springer-Verlag, Berlin Heidelberg, 2002,
für FeSb₂, FeSe₂, FeTe₂, FeZn₁₃ aus
Barin, I., Thermochemical Data of Pure Substances,
VCH Verlagsgesellschaft, Weinheim, 1989

### Literatur zu Figur 4:

Werte zum linearen Ausdehnungskoeffizienten siehe
Emsley, J., 'The Elements", Clarendon Press, Oxford, 1989

## Patentansprüche

1. Zinnbad zum Verzinnen von Stützkörpern von Gleitlagern, **dadurch gekennzeichnet, dass** das Zinn(Sn)-Bad zumindest einen Legierungsbestandteil, der bei Betriebstemperatur des Bades eine höhere Affinität zu Fe als Sn aufweist, bis zu dessen Löslichkeitsgrenze in der Sn-Schmelze enthält.

2. Zinnbad nach Anspruch 1, **dadurch gekennzeichnet, dass** das Zinn(Sn)-Bad Zink (Zn) enthält.

3. Zinnbad nach Anspruch 2, **dadurch gekennzeichnet, dass** der Sn-Schmelze festes Zn in einer Menge beigegeben ist, die die in der Sn-Schmelze jeweils lösbare Zn-Menge übersteigt.

4. Zinnbad nach Anspruch 2, **dadurch gekennzeichnet, dass** der Sn-Schmelze eine feste Zn-Legierung in einer Menge beigegeben ist, die die in der Sn-Schmelze aus der Zn-Legierung entsprechend dem Phasengleichgewicht Sn/Zn jeweils lösbare Zn-Menge übersteigt.

5. Zinnbad nach Anspruch 3 oder 4, **dadurch gekennzeichnet, dass** in die Sn-Schmelze ein Zn-Körper oder ein Körper aus einer Zn-Legierung eintaucht.

6. Zinnbad nach einem der vorhergehenden Ansprüche, **dadurch gekennzeichnet, dass** die Sn/Zn-Schmelze eine Temperatur von 350 °C aufweist.

7. Zinnbad nach einem der vorhergehenden Ansprüche, **dadurch gekennzeichnet, dass** in der Sn-Schmelze ein oder mehrere Legierungselemente gelöst sind, die mit Fe Verbindungen oder Mischkristalle bilden und gleichzeitig als Gleitlagermetalle oder als Legierungselemente in Gleitlagermetallen verwendet werden.

8. Zinnbad nach einem der vorhergehenden Ansprüche, **dadurch gekennzeichnet, dass** in der Sn-Schmelze Metalle gelöst sind, deren mittlerer linearer Ausdehnungskoeffizient größer ist als der von Fe.

9. Zinnbad nach einem der vorhergehenden Ansprüche, **dadurch gekennzeichnet, , dass** Gold(Au), Kupfer(Cu), Tellur(Te), Silber(Ag), Selen(Se), Aluminium(Al), Wismut(Bi) und/oder Indium(In) oder Legierungen eingesetzt sind, die die vorgenannten Metalle kombiniert enthalten.

10. Zinnbad nach Anspruch 7, 8 oder 9, **dadurch gekennzeichnet, dass** in der Sn-Schmelze Pb, Cd und/oder As in Beimengen unterhalb vorgegebener ökologischer Maximalwerte enthalten sind.

11. Stützkörper als Träger für Gleitlagermetalle mit einer zwischen Stützkörperoberfläche und Gleitlagermetall auf der Stützkörperoberfläche durch Verzinnen aufgebrachten Zwischenschicht aus Zinn(Sn), **dadurch gekennzeichnet, dass** die Zwischenschicht zumindest einen Legierungsbestandteil enthält, der eine höhere Affinität zu Fe als Sn aufweist.

12. Stützkörper nach Anspruch 11, **dadurch gekennzeichnet, dass** die Zwischenschicht Zink (Zn) enthält.

13. Stützkörper nach Anspruch 12, **dadurch gekennzeichnet, dass** die Zwischenschicht Sn und Zn in gleichem Gewichtsverhältnis enthält.

14. Stützkörper nach einem der vorhergehenden Ansprüche 11 bis 13, **dadurch gekennzeichnet, dass** die Zwischenschicht ein oder mehrere Legierungselemente enthält. die mit Fe Verbindungen oder Mischkristalle bilden und gleichzeitig als Gleitlagermetalle oder als Legierungselemente in Gleitlagermetallen verwendet werden.

15. Stützkörper nach einem der vorhergehenden Ansprüche 11 bis 14, **dadurch gekennzeichnet, dass** die Zwischenschicht Metalle enthält, deren mittlerer linearer Ausdehnungskoeffizient größer ist als der von Fe.

16. Stützkörper nach einem der vorhergehenden Ansprüche 11 bis 15, **dadurch gekennzeichnet, dass** Gold(Au), Kupfer(Cu), Tellur(Te), Silber(Ag), Selen(Se), Aluminium(Al), Wismut(Bi) und/oder Indium(In) oder Legierungen enthalten sind, die die vorgenannten Metalle kombiniert aufweisen.

17. Stützkörper nach Anspruch 14, 15 oder 16, **dadurch gekennzeichnet, dass** in der Zwischenschicht Pb, Cd und/oder As in Beimengen unterhalb vorgegebener ökologischer Maximalwerte enthalten sind.
